# EUROPÄISCHE PATENTSCHRIFT

(11) **EP 2 871 420 B1**
(45) Veröffentlichungstag und Bekanntmachung des Hinweises auf die Patenterteilung: **07.09.2016**
(21) Anmeldenummer: 13192026.6
(22) Anmeldetag: 07.11.2013
(51) Int. Cl.: F24D 3/10, F04D 15/00, F16K 1/00, F24D 19/10, G05D 23/00, F04D 29/70

(54) **Umwälzpumpenaggregat für ein Heizungs- und/oder Kühlsystem**
Circulating pump unit for a heating and/or cooling system
Module de pompe de circulation pour un système de chauffage et/ou de refroidissement

(43) Veröffentlichungstag der Anmeldung: 13.05.2015
(73) Patentinhaber: Grundfos Holding A/S, 8850 Bjerringbro (DK)
(72) Erfinder: Sørensen, Søren, Emil, 8860 Ulstrup (DK)
(74) Vertreter: Patentanwälte Vollmann & Hemmer

(56) Entgegenhaltungen:
- WO-A1-90/04136
- CH-A- 465 813
- DE-U1- 20 104 615
- US-B1- 6 345 770

## Beschreibung

Die Erfindung betrifft ein Umwälzpumpenaggregat für ein Heizungs- und/oder Kühlsystem mit den im Oberbegriff des Anspruchs 1 angegebenen Merkmalen.

Hydraulische Heizungs- und/oder Kühlsysteme nutzen üblicherweise einen flüssigen Wärmeträger bzw. ein Fluid, welches in einem Rohrleitungssystem umgewälzt wird. Dazu ist in der Regel zumindest ein elektrisch angetriebenes Umwälzpumpenaggregat vorhanden.

Ferner ist es bekannt, in derartigen Heizungs- und/oder Kühlsystemen Mischeinrichtungen zu verwenden, in welchen zwei Fluidströmungen unterschiedlicher Temperatur gemischt werden, um eine gewünschte Solltemperatur einzustellen.

CH 465813 offenbart ein Einbauelement für Heizungsanlagen, welches eine Umwälzpumpe und ein Mischventil aufweist, deren hydraulische Verbindungen in einen einstückigen Tragkörper integriert sind. In diesem System sind separate elektrische Komponenten zur Betätigung des Mischventils und zum Betrieb des Pumpenaggregates erforderlich.

Es ist Aufgabe der Erfindung, ein Umwälzpumpenaggregat dahingehend zu verbessern, dass ein einfacherer Aufbau eines Heizungs- und/oder Kühlsystems mit einer Mischeinrichtung möglich wird. Diese Aufgabe wird durch ein Umwälzpumpenaggregat mit den in Anspruch 1 angegebenen Merkmalen sowie durch einen hydraulischen Verteiler mit einem solchen Pumpenaggregat gemäß Anspruch 11 gelöst.

Bevorzugte Ausführungsformen ergeben sich aus den Unteransprüchen, der nachfolgenden Beschreibung sowie den beigefügten Figuren.

Das erfindungsgemäße Umwälzpumpenaggregat ist für ein Heizungs- und/oder Kühlsystem vorgesehen und weist zumindest einen elektrischen Antriebsmotor auf. Dieser elektrische Antriebsmotor ist vorzugsweise als Spaltrohrmotor, d. h. als nasslaufender elektrischer Antriebsmotor ausgebildet. Der Antriebsmotor ist vorzugsweise in einem Motor- bzw. Statorgehäuse angeordnet und mit einem Pumpengehäuse verbunden. D. h. das Statorgehäuse ist mit dem Pumpengehäuse verbunden, wobei im Falle eines nasslaufenden elektrischen Antriebsmotors vorzugsweise das Spaltrohr im Inneren des Antriebsmotors gegen das Pumpengehäuse abgedichtet ist. In dem Pumpengehäuse sind die erforderlichen Strömungswege durch die Pumpe ausgebildet und ist insbesondere zumindest ein Laufrad gelegen, welches von dem Antriebsmotor drehend angetrieben wird. D. h. das Pumpengehäuse weist einen Aufnahmeraum auf, in welchem das Laufrad rotiert. Dieser Aufnahmeraum ist über einen Saugmund mit zumindest einem ersten Einlass, welcher in dem Pumpengehäuse ausgebildet ist, verbunden. Ferner ist der Aufnahmeraum ausgangsseitig bzw. druckseitig mit zumindest einem ersten Auslass verbunden, welcher in dem Pumpengehäuse vorgesehen ist. Der erste Einlass und der erste Auslass sind vorgesehen, um das Pumpengehäuse mit externen Komponenten, beispielsweise sich anschließenden Rohrleitungen, zu verbinden.

Erfindungsgemäß weist das Pumpengehäuse einen zweiten Einlass auf, welcher im Inneren des Pumpengehäuses an einem Mischpunkt mit dem ersten Einlass verbunden ist. So können an dem Mischpunkt zwei Fluidströmungen, nämlich aus dem ersten und dem zweiten Einlass, gemischt werden. Der Teil des Pumpengehäuses, in welchem die Strömungswege von dem ersten und dem zweiten Einlass zu dem Mischpunkt ausgebildet sind, ist vorzugsweise einstückig, insbesondere aus Kunststoff ausgebildet. Weiter bevorzugt ist dieser Gehäuseteil, in welchem die Strömungswege von dem ersten und dem zweiten Einlass zu dem Mischpunkt ausgebildet sind, ebenfalls mit dem Gehäuseteil einstückig ausgebildet, welcher den Strömungsweg von dem Mischpunkt zu dem Aufnahmeraum, in welchem das Laufrad rotiert, begrenzt.

Auch der Strömungsweg von dem Aufnahmeraum, in welchem das Laufrad rotiert, zu dem zumindest ersten Auslass ist vorzugsweise in einem Gehäuseteil angeordnet, welcher einstückig mit den vorgenannten Gehäuseteilen des Pumpengehäuses, insbesondere aus Kunststoff ausgebildet ist.

Ferner ist in dem Pumpengehäuse zumindest ein Regulierventil bzw. Mischventil angeordnet, welches derart ausgebildet ist, dass es das Mischungsverhältnis zweier sich an dem Mischpunkt mischender Strömungen regulieren kann. Dazu kann das Regulierventil im Strömungsweg von einem der Einlässe zu dem Mischpunkt gelegen sein, um direkt den Fluidstrom zu dem Mischpunkt regeln zu können. In einem geschlossenen System kann das Regulierventil jedoch auch an anderer Stelle gelegen sein, um die Strömung zu dem Mischpunkt indirekt zu beeinflussen. Es kann beispielsweise in einem den Mischpunkt umgehenden Strömungsweg gelegen sein, wobei durch Regulierung der Strömung in den den Mischpunkt umgehenden Strömungsweg gleichzeitig der Anteil, welcher nicht durch diesen Strömungsweg, sondern über den Mischpunkt geführt wird, reguliert wird. Das Regulierventil ist vorzugsweise in eine Aufnahme in dem Pumpengehäuse eingesetzt, wobei die Aufnahme vorzugsweise einstückig mit den Gehäuseteilen, welche die Strömungswege von den Einlässen zu dem Mischpunkt und von dem Mischpunkt zu dem Laufrad sowie von dem Laufrad zu dem Auslass definieren, ausgebildet ist. Vorzugsweise ist das Regulierventil aus der Aufnahme entnehmbar, beispielsweise um es zu Wartungszwecken entnehmen zu können. Das Pumpengehäuse kann weitere Öffnungen oder Aufnahmen aufweisen, welche durch Verschlusselemente oder eingesetzte Bauteile verschlossen sind. Dies können beispielsweise Öffnungen oder Aufnahmen für Sensoren, Entlüftungsventile und ähnliches sein.

Ferner weist das Umwälzpumpenaggregat eine Steuereinrichtung auf, welche dazu ausgebildet ist, das Regulierventil zur Regulierung des Mischungsverhältnisses einzustellen. Das heißt, die Steuereinrichtung kann ein gewünschtes Mischungsverhältnis durch Ansteuerung des Regulierventiles einstellen und so beispielsweise eine gewünschte Voriauftemperatur einstellen.

Die Integration einer Mischeinrichtung in das Pumpengehäuse hat den Vorteil, dass die Anzahl der erforderlichen Bauteile für Heizungs- und/oder Kühlsysteme reduziert wird, sodass die Montage vereinfacht wird. Darüber hinaus wird ein kompakter Aufbau erreicht, der es ermöglicht, die Umwälzpumpe mit der Mischeinrichtung auf einfache Weise in andere Komponenten eines Heizungs- bzw. Kühlsystems zu integrieren.

Gemäß einer ersten möglichen Ausführungsform ist das Regulierventil in einem ersten Strömungsweg von dem ersten Einlass zu dem Mischpunkt zur Regulierung des Durchflusses durch diesen Strömungsweg angeordnet. Das Laufrad der Pumpe liegt bevorzugt stromabwärts des Mischpunktes, sodass die Umwälzpumpe Fluid von dem Mischpunkt ansaugt. Wenn das Umwälzpumpenaggregat bzw. dessen Laufrad einen konstanten Förderstrom fördert und der Durchfluss in dem Strömungsweg von dem ersten Einlass zu dem Mischpunkt beispielsweise verringert wird, wird das Umwälzpumpenaggregat entsprechend einen höheren Anteil von Fluid durch den Strömungsweg von dem zweiten Einlass zu dem Mischpunkt ansaugen. Auf diese Weise kann durch Veränderung des Durchflusses in nur einem der zu dem Mischpunkt führenden Strömungswege das Mischungsverhältnis zweier unterschiedlich temperierter Flüssigkeiten verändert werden.

Gemäß einer bevorzugten Ausführungsform der Erfindung weist das Pumpengehäuse einen zweiten Auslass auf, welcher über einen Kanal im Inneren des Pumpengehäuses mit dem zweiten Einlass verbunden ist.

Dieser Kanal bzw. Strömungsweg führt dabei vorzugsweise nicht über das Laufrad der Umwälzpumpe, sondern bildet in einem Kreislauf eines Heizungs- oder Kühlsystems vorzugsweise einen Rücklauf, aus dem Fluid zu dem Mischpunkt geleitet wird, während der erste Einlass des Pumpengehäuses zur Verbindung mit einer externen Fluidversorgung von einer Wärme- oder Kältequelle vorgesehen ist. Auf diese Weise wird an dem Mischpunkt Fluid aus einer Fluidversorgung mit rücklaufendem Fluid aus dem Rücklauf gemischt. Im Falle eines Heizungssystems hat das Fluid aus dem Rücklauf üblicherweise eine niedrigere Temperatur als das von einer Wärmequelle durch den ersten Einlass zugeführte Fluid. In einem Kühlsystem hat üblicherweise umgekehrt das Fluid aus dem Rücklauf eine höhere Temperatur als das von einer Kältequelle durch den ersten Einlass zugeführte Fluid. Der Gehäuseteil, welcher den Kanal im Inneren des Pumpengehäuses von dem zweiten Einlass zu dem zweiten Auslass definiert, ist vorzugsweise ebenfalls einstückig mit den oben beschriebenen Gehäuseteilen, welche die übrigen Strömungswege durch das Pumpengehäuse definieren, ausgebildet. Auf diese Weise werden die Montage von Einzelteilen und die Abdichtung von Einzelteilen vermieden, da alle wesentlichen Strömungswege in einem einstückig, vorzugsweise aus Kunststoff gefertigten Gehäuse geformt werden können.

Gemäß einer besonders bevorzugten Ausführungsform der Erfindung ist das Regulierventil zur Regulierung des Durchflusses in dem Kanal zwischen dem zweiten Einlass und dem zweiten Auslass stromabwärts einer Verbindung dieses Kanals mit dem Mischpunkt angeordnet. Wie beschrieben dient der zweite Auslass vorzugsweise zur Verbindung mit einem Rücklauf zu einer Wärme- oder Kältequelle, während der erste Einlass zur Verbindung mit einem Zulauf von einer Wärme- oder Kältequelle dient. Der erste Auslass des Pumpenaggregates dient zum Anschluss zumindest eines Lastkreises, während der zweite Einlass zum Anschluss des Rücklaufes dieses zumindest einen Lastkreises dient. Bei der beschriebenen Anordnung des Regulierventils in dem Kanal von dem zweiten Einlass zu dem zweiten Auslass stromabwärts der Verbindung zu dem Mischpunkt wird somit über das Regulierventil der zu der Wärme- bzw. Kältequelle zurückfließende Strömungsanteil reguliert. Wird dieser Strömungsanteil verringert, wird entsprechend ein höherer Anteil aus dem Rückfluss von dem zweiten Einlass zu dem Mischpunkt geleitet. Wenn der Abfluss durch den zweiten Auslass erhöht wird, verringert sich entsprechend dieser zu dem Mischpunkt geleitete Teil der Strömung.

Gemäß einer weiteren möglichen Ausführungsform der Erfindung kann das Regulierventil bzw. Mischventil als ein Drei-Wegeventil ausgebildet sein, welches am Mischpunkt angeordnet ist. So kann das Ventil direkt das Mischungsverhältnis zwischen zwei Eingängen zu einem Ausgang durch Verstellung eines Ventilelementes einstellen.

Wie beschrieben, ist das Pumpengehäuse bevorzugt einstückig, vorzugsweise aus Kunststoff gefertigt. Dabei ist besonders bevorzugt das gesamte Pumpengehäuse bis auf eingesetzte Komponenten, wie Ventile und Sensoren und gegebenenfalls erforderliche Verschlusselemente von Öffnungen einstückig als ein Bauteil ausgebildet, welches vorzugsweise alle erforderlichen Strömungswege zwischen dem ersten Einlass, zweiten Einlass und erstem Auslass sowie gegebenenfalls dem zweiten Auslass in seinem Inneren definiert. Ferner weist dieses Pumpengehäuse einen Aufnahmeraum für zumindest ein Laufrad auf.

Das Regulierventil ist bevorzugt ein motorisch angetriebenes Ventil. Insbesondere handelt es sich um ein Ventil, dessen Öffnungsgrad veränderbar ist, insbesondere proportional veränderbar ist. Dies kann beispielsweise über einen als Schrittmotor ausgebildeten Antriebsmotor erfolgen. Weiter bevorzugt lässt sich das Regulierventil über den Antrieb auch vollständig schließen.

Erfindungsgemäß ist eine Steuereinrichtung vorgesehen, welche mit dem Regulierventil zu dessen Ansteuerung elektrisch verbunden ist. D. h. die Steuereinrichtung gibt vorzugsweise den Öffnungsgrad des Regulierventils vor und steuert dieses so an, dass es den gewünschten Öffnungsgrad einstellt. Dabei kann die Steuereinrichtung den Öffnungsgrad bevorzugt auf Grundlage eines erfassten Temperatursignals regeln, um durch die Mischung der Strömungen an dem Mischpunkt eine gewünschte Vorlauftemperatur stromabwärts des Mischpunktes einzustellen.

Die Steuereinrichtung ist in einem Elektronikgehäuse angeordnet, wobei das Elektronikgehäuse weiter an dem Antriebsmotor des Pumpenaggregates angeordnet ist. Dabei kann das Elektronikgehäuse in ein Stator- bzw. Motorgehäuse des Antriebsmotors integriert sein bzw. von dem Stator- oder Motorgehäuse gebildet sein. Alternativ kann das Elektronikgehäuse als separates Gehäuse an die Außenseite des Motor- bzw. Statorgehäuses des Antriebsmotors angesetzt sein. In diesem Elektronikgehäuse sind ferner die elektronischen Komponenten zur Ansteuerung bzw. Regelung des Antriebsmotors des Umwälzpumpenaggregates angeordnet. Diese Ausgestaltung hat den Vorteil, dass sämtliche elektronischen Komponenten, welche zur Regelung bzw. Steuerung des Antriebsmotors und des Regulierventils der Mischeinrichtung erforderlich sind, in ein Elektronikgehäuse des Umwälzpumpenaggregates integriert werden können.

Weiter bevorzugt ist die Steuereinrichtung mit zumindest einem Temperatursensor signalverbunden, welcher vorzugsweise an einem Strömungsweg im Inneren des Pumpengehäuses angeordnet ist. So kann der Temperatursensor die Temperatur des Fluids in diesem Strömungsweg erfassen. Die Steuereinrichtung kann auf Grundlage der erfassten Temperatur das Mischungsverhältnis durch Ansteuerung des Regulierventils einstellen, um eine gewünschte Solltemperatur als Vorlauftemperatur zu erzielen. Bevorzugt ist der Temperatursensor daher an einem Strömungsweg stromabwärts des Mischpunktes gelegen, sodass er die Temperatur des gemischten Fluids erfasst.

Gemäß einer besonderen Ausführungsform der Erfindung ist das Pumpengehäuse ferner an einer Gehäuseseite zur Verbindung, d. h. bevorzugt direkten Verbindung mit einem hydraulischen Verteiler ausgebildet. Dies ermöglicht es, einen hydraulischen Verteiler mit der Umwälzpumpe zu einer Baueinheit zu integrieren, wobei der Verteiler direkt angrenzend an die Umwälzpumpe angeordnet ist. Auf diese Weise wird ein kompakter Aufbau mit einfacher Montage ermöglicht, da die Zahl der erforderlichen externen Verrohrungen minimiert wird. Der hydraulische Verteiler dient bevorzugt dazu, mehrere Lastkreise an die Ausgangsseite der Umwälzpumpe, d. h. deren ersten Auslass und zweiten Einlass anschließen zu können. Dabei wird eine Zulaufleitung in dem hydraulischen Verteiler, durch welche das Fluid den Eingängen der mehreren Lastkreise zugeführt wird, mit dem ersten Auslass des Pumpengehäuses verbunden, während eine Rücklaufleitung in dem hydraulischen Verteiler mit dem zweiten Einlass des Pumpengehäuses verbunden wird. Mit der Rücklaufleitung in dem hydraulischen Verteiler werden über geeignete Anschlüsse die Ausgänge der mehreren Lastkreise verbunden.

An der Gehäuseseite, welche zur Verbindung mit dem hydraulischen Verteiler ausgebildet ist, sind somit vorzugsweise der zweite Einlass sowie der erste Auslass des Pumpengehäuses gelegen. Der zweite Einlass sowie der erste Auslass sind dabei weiter bevorzugt als hydraulische Kupplungen, insbesondere Steckkupplungen ausgebildet, welche direkt mit korrespondierenden Kupplungen an dem hydraulischen Verteiler in Eingriff treten können, um eine hydraulische Verbindung zwischen dem zweiten Einlass und einer Rücklaufleitung in dem hydraulischen Verteiler und zwischen dem ersten Auslass und einer Zulaufleitung in dem hydraulischen Verteiler zu ermöglichen.

Gegenstand der Erfindung ist neben dem vorangehend beschriebenen Umwälzpumpenaggregat auch ein hydraulischer Verteiler mit einem solchen Umwälzpumpenaggregat, wie es vorangehend beschrieben wurde. Der hydraulische Verteiler weist zumindest ein Lastmodul auf, welches mit dem Pumpengehäuse des Umwälzpumpenaggregates verbunden ist. Dabei weist das Lastmodul in seinem Inneren einen Abschnitt einer Zulaufleitung und/oder einen Abschnitt einer Rücklaufleitung auf, wobei der Abschnitt der Zulaufleitung mit dem ersten Auslass des Pumpengehäuses verbunden ist und zumindest einen Zulaufanschluss aufweist, während der Abschnitt der Rücklaufleitung mit dem zweiten Einlass des Pumpengehäuses verbunden ist und zumindest einen Rücklaufanschluss aufweist. Mit dem Zulaufanschluss und dem Rücklaufanschluss wird ein Lastkreis verbunden. So kann über den ersten Auslass des Pumpengehäuses gefördertes Fluid dem Eingang eines an dem Zulaufanschluss angeschlossenen Lastkreises zugeführt werden, welches dann von dem Ausgang des Lastkreises über den Rücklaufanschluss zurück in den zweiten Eingang des Pumpengehäuses strömt. Hinsichtlich der weiteren Ausgestaltung des Umwälzpumpenaggregates wird auf die vorangehende Beschreibung verwiesen.

Das zumindest eine Lastmodul ist bevorzugt lösbar mit dem Pumpengehäuse verbunden. Dies ermöglicht eine einfache Montage durch modularen Aufbau und ein leichtes Zerlegen der Baueinheit zu Wartungs- und/oder Reparaturzwecken.

Weiter bevorzugt ist das Lastmodul an einem ersten Längsende mit dem Pumpengehäuse und einem zweiten abgewandten Längsende mit einem weiteren Lastmodul, vorzugsweise lösbar, verbunden. Auf diese Weise können mehrere Lastmodule miteinander verbunden und in Längsrichtung aneinandergereiht werden. Dabei ist die Längsrichtung im Wesentlichen die Richtung, in welcher sich die in den Lastmodulen definierten Abschnitte der Zulauf- und der Rücklaufleitung erstrecken. Auf diese Weise kann eine gewünschte Anzahl von Lastmodulen aneinandergereiht werden, welche von der Anzahl der zu versorgenden Lastkreise abhängt, wobei vorzugsweise für jeden Lastkreis ein Lastmodul vorgesehen wird. So wird ein modular anpassbarer hydraulischer Verteiler geschaffen. Zwischen den Lastmodulen sind hydraulische Kupplungen ausgebildet, welche der hydraulischen Kupplung zwischen dem Pumpengehäuse und dem ersten angrenzenden Lastmodul entsprechen, sodass alle Lastmodule gleich ausgebildet werden können.

Vorzugsweise ist in dem zumindest einen Lastmodul eine Reguliereinrichtung zum Regulieren des Durchflusses durch einen an den Zulauf- und den Rücklaufanschluss angeschlossenen Lastkreis angeordnet. Die Reguliereinrichtung kann vorzugsweise ein Regulierventil sein, insbesondere ein elektromotorisch angetriebenes Regulierventil in Form eines Proportionalventils. Alternativ kann auch ein in anderer Weise angetriebenes Regulierventil, z. B. mit thermoelektrischem Antrieb verwendet werden. Dabei kann das Regulierventil so ausgebildet sein, dass es auch vollständig geschlossen werden kann, um den Lastkreis vollständig zu schließen, d. h. auszuschalten. Die Durchflussregulierung durch eine Reguliereinrichtung in jedem Lastmodul hat den Vorteil, dass der Durchfluss bzw. Volumenstrom für jeden Lastkreis individuell eingestellt und im Betrieb verändert werden kann. So kann der Durchfluss an aktuelle Erfordernisse, insbesondere an den Energiebedarf des Lastkreises angepasst werden. Bevorzugt ist die Reguliereinrichtung in einem Strömungsweg von dem Rücklaufanschluss zu dem Abschnitt der Rücklaufleitung im Inneren des Lastmoduls angeordnet. Sie könnte jedoch entsprechend auch im Strömungsweg zwischen dem Abschnitt der Zulaufleitung und dem Zulaufanschluss angeordnet sein.

Weiter bevorzugt ist eine Steuereinrichtung zur Ansteuerung der Reguliereinrichtungen der Lastmodule vorgesehen. Besonders bevorzugt ist in dem Umwälzpumpenaggregat, vorzugsweise in einem an dem Antriebsmotor angeordneten Elektronikgehäuse, eine Verteiler-Steuereinrichtung angeordnet, welche mit der zumindest einen Reguliereinrichtung in dem zumindest einen Lastmodul, vorzugsweise mit den Reguliereinrichtungen von mehreren Lastmodulen, zu deren Ansteuerung signalverbunden ist. D. h. es gibt eine zentrale Steuereinrichtung in Form der Verteiler-Steuereinrichtung, welche die Reguliereinrichtungen der einzelnen Lastmodule ansteuert, um eine Durchflussregelung für die Lastkreise bereitzustellen. Die Verteiler-Steuereinrichtung ist vorzugsweise wie die oben beschriebenen Steuereinrichtungen in das Elektronikgehäuse an dem Antriebsmotor des Umwälzpumpenaggregates integriert, sodass nur ein einziges Elektronikgehäuse vorgesehen werden muss.

Weiter bevorzugt ist zwischen dem Lastmodul und dem Pumpengehäuse und bevorzugt zwischen dem Lastmodul und einem weiteren Lastmodul eine elektrische Kupplung ausgebildet. Über diese wird eine elektrische Verbindung zur Energieversorgung und vorzugsweise auch zur Signalübertragung von der in dem Umwälzpumpenaggregat angeordneten Verteiler-Steuereinrichtung zu den Reguliereinrichtungen in den Lastmodulen geschaffen. Für den Fall, dass eine Vielzahl von Lastmodulen vorgesehen ist, sind zwischen diesen ebenfalls elektrische Verbindungen in Form elektrischer Kupplungen, insbesondere Steckkupplungen, ausgebildet, über welche die Reguliereinrichtungen der weiteren Lastmodule mit Energie versorgt und angesteuert werden.

Nachfolgend wird die Erfindung beispielhaft anhand der beigefügten Figuren beschrieben. In diesen zeigt:
- Fig. 1: einen hydraulischen Verteiler gemäß der Erfindung im nicht zusammengesetzten Zustand,
- Fig. 2: schematisch den hydraulischen Verteiler gemäß Fig. 1 im zusammengesetzten Zustand,
- Fig. 3: eine perspektivische Ansicht eines Hauptmoduls des erfindungsgemäßen hydraulischen Verteilers,
- Fig. 4: eine schematische Ansicht eines Lastmoduls des erfindungsgemäßen hydraulischen Verteilers,
- Fig. 5: eine perspektivische Ansicht des hydraulischen Verteilers mit dem Hauptmodul gemäß Fig. 3 und dem Lastmodul gemäß Fig. 4, und
- Fig. 6: eine Draufsicht auf den hydraulischen Verteiler gemäß Fig. 5.

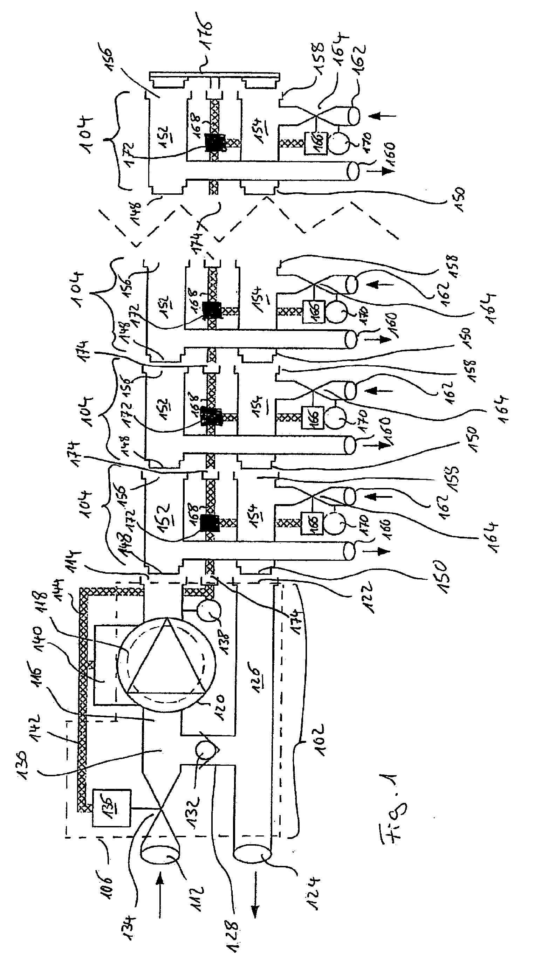

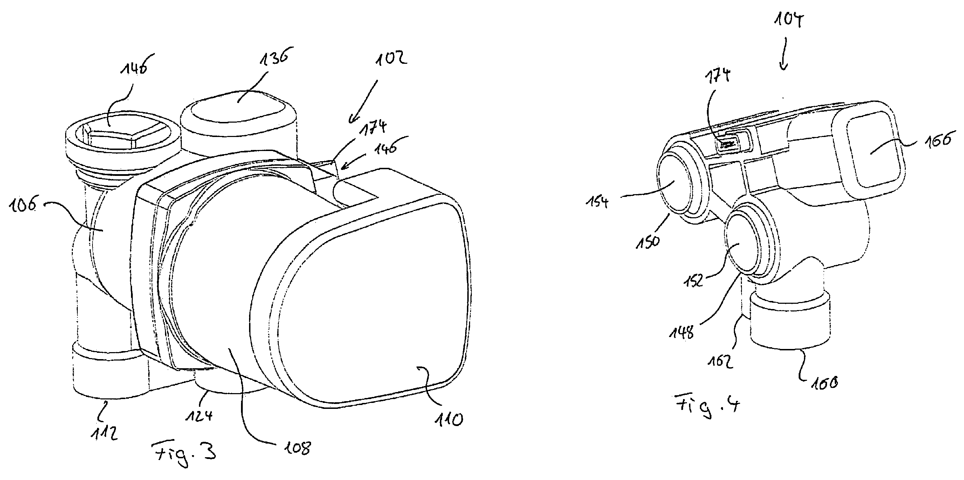

Der in den Figuren 1 - 6 gezeigte hydraulische Verteiler ist modular aufgebaut und besteht im Wesentlichen aus zwei Arten von Modulen, einem Hauptmodul 102 sowie mehreren Lastmodulen 104. Das Hauptmodul 102 ist im Wesentlichen von einem Pumpenaggregat gebildet. Wie in Fig. 3 gezeigt, weist das Pumpenaggregat ein Pumpengehäuse 106 mit einem daran angeordneten Statorgehäuse 108 auf. In dem Pumpengehäuse 106 sind die erforderlichen Strömungswege sowie ein Aufnahmeraum 120 für ein Laufrad 118 ausgebildet. Das Laufrad 118 wird von einem elektrischen Antriebsmotor angetrieben, welcher in dem Motor- bzw. Statorgehäuse 108 angeordnet ist. Dabei ist der elektrische Antriebsmotor vorzugsweise als nasslaufender Motor ausgebildet. An der Außenseite des Statorgehäuses 108 ist am axialen Ende ein Elektronikgehäuse 110 angeordnet, in welchem unter anderem die elektronischen Bauteile zur Steuerung bzw. Regelung des elektrischen Antriebsmotors in dem Statorgehäuse 108 untergebracht sind.

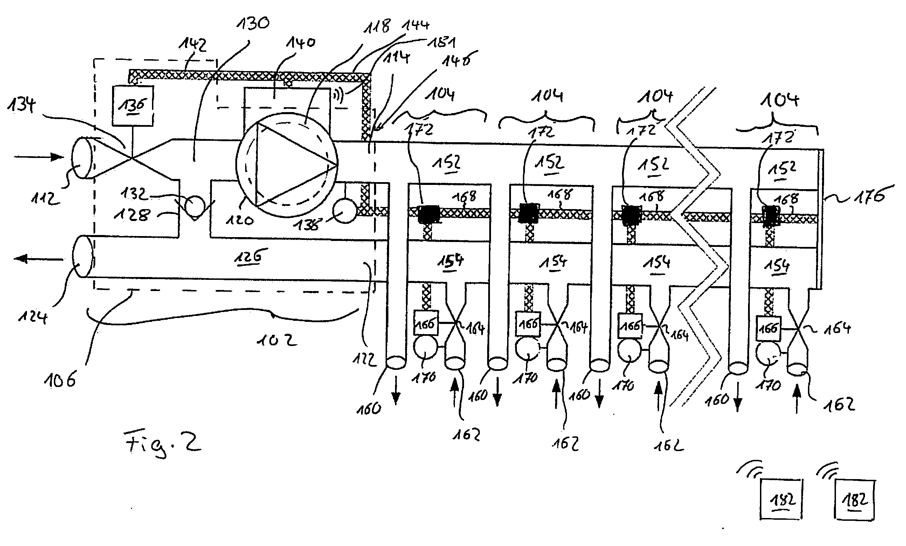

Das in Fig. 3 gezeigte Umwälzpumpenaggregat bildet das Hauptmodul 102. Bei diesem Umwälzpumpenaggregat sind in dem Pumpengehäuse 106 neben dem Laufrad die Komponenten einer Mischeinrichtung, deren Funktion anhand der Figuren 1 und 2 beschrieben wird, untergebracht. Das Pumpengehäuse weist einen ersten Einlass 112 sowie einen ersten Auslass 114 auf. In einem ersten Strömungsweg 116 zwischen dem ersten Einlass 112 und dem ersten Auslass 114 liegt die Umwälzpumpe mit dem Laufrad 118. Das Laufrad 118 liegt in einem Aufnahmeraum 120 im Inneren des Pumpengehäuses 106, welches in den Figuren 1 und 2 als gestrichelte Linie schematisch dargestellt ist. Das Laufrad 118 fördert angetrieben durch den Antriebsmotor ein als Wärmeträger fungierendes Fluid, d. h. eine Flüssigkeit von dem ersten Einlass 112 zu dem ersten Auslass 114.

Das Pumpengehäuse 106 weist darüber hinaus einen zweiten Einlass 122 sowie einen zweiten Auslass 124 auf. Der zweite Einlass 122 ist mit dem zweiten Auslass 124 über einen Kanal 126, welcher einen Strömungsweg im Inneren des Pumpengehäuses 106 bildet, verbunden. Der Kanal 126 führt nicht durch das Laufrad 118, sondern erstreckt sich separat in dem Pumpengehäuse 106. Der Kanal 126 ist über eine Verbindung 128 mit einem Mischbereich bzw. Mischpunkt 130 in dem Strömungsweg 116 verbunden. An dem Mischpunkt 130 werden die Fluidströmungen von dem ersten Einlass 112 und dem zweiten Einlass 122 gemischt. Da das Laufrad 118 stromabwärts des Mischpunktes 130 gelegen ist, saugt es Fluid sowohl aus dem ersten Einlass 112 als auch über die Verbindung 128 aus dem Kanal 126 und damit dem zweiten Einlass 122 an. In der Verbindung 128 ist ein Rückschlagventil 132 angeordnet, welches eine Strömung nur in der Richtung von dem Kanal 126 zu dem Mischpunkt 130 zulässt.

In dem Strömungsweg von dem ersten Einlass 112 zu dem Mischpunkt 130 ist ein Regulierventil 134 angeordnet. Dies ist über einen elektrischen Antriebsmotor 136 in seinem Öffnungsgrad einstellbar. Das Regulierventil 134 fungiert als Mischventil, um das Mischungsverhältnis der zwei genannten Strömungen an dem Mischpunkt 130 einstellen zu können. Wenn das Regulierventil 134 geschlossen ist, kann keine Strömung von dem ersten Einlass 112 zu dem Mischpunkt 130 erfolgen und die Umwälzpumpe saugt über deren Laufrad 118 Fluid ausschließlich über den zweiten Einlass 122 durch den Kanal 126 und die Verbindung 128 an. Wenn das Regulierventil 134 geöffnet wird, wird ein Teil der Strömung durch das Pumpenaggregat durch den ersten Einlass 112 angesaugt, sodass in dem Mischpunkt 130 eine Strömung aus dem ersten Einlass 112 mit einer Strömung aus dem zweiten Einlass 122 gemischt wird. Je nach Öffnungsgrad des Regulierventils 134 ändert sich das Mischungsverhältnis. Wenn nun der erste Einlass 112 an einen Zulauf eines Heizungssystems angeschlossen ist, durch welchen heißes Fluid zugeführt wird und der zweite Einlass 122 an einen Rücklauf zumindest eines Lastkreises angeschlossen ist, wird durch den zweiten Einlass 122 kälteres Fluid zugeführt und zugemischt. Durch die Zumischung des kälteren Fluids aus dem zweiten Einlass 122 zu dem wärmeren Fluid aus dem ersten Einlass 112 ist es somit möglich, die Vorlauftemperatur des aus dem ersten Auslass 114 stromabwärts des Mischpunktes 130 austretenden Fluids gegenüber der Temperatur des in den ersten Einlass 112 eintretenden Fluids zu reduzieren. Die tatsächlich erreichte Vorlauftemperatur an dem ersten Auslass 114 wird über einen Temperatursensor 138, welcher ebenfalls in das Umwälzpumpenaggregat bzw. dessen Pumpengehäuse 106 integriert ist, erfasst. Es ist zu verstehen, dass das Regulierventil 134 anstatt in dem Strömungsweg zwischen dem ersten Einlass 112 und dem Mischpunkt 130 auch in entsprechender Weise zwischen dem zweiten Auslass 124 und dem Abzweig der Verbindung 128 von dem Kanal 126 angeordnet werden könnte.

Für den Fall, dass der gezeigte hydraulische Verteiler für ein Kühlsystem verwendet wird, kann durch den ersten Einlass 112 ein kaltes Fluid zugeführt werden, während über den zweiten Einlass 122 aus dem Rücklauf eines Lastkreises wärmeres Fluid zugeführt wird. So ist es durch die Zumischung dieses wärmeren Fluids an dem Mischpunkt 130 möglich, die Vorlauftemperatur des zugeführten kalten Fluids zu erhöhen. Durch die Einstellung des Mischungsverhältnisses kann auch hier die Temperatur auf eine gewünschte Solltemperatur eingestellt werden.

Die Regelung bzw. Steuerung dieser Mischeinrichtung, d. h. die Temperaturregelung wird von einer Steuereinrichtung 140 übernommen, welche in dem Elektronikgehäuse 110 des Umwälzpumpenaggregates 102 angeordnet ist. Die Steuereinrichtung 140 steuert den Motor 136 des Regulierventils 134 an, sodass dieses einen von der Steuereinrichtung 140 vorgegebenen Öffnungsgrad einnimmt. Dazu ist der Motor 136 des Regulierventils 134 über eine Signalverbindung 142, welche beispielsweise als Datenbus ausgebildet sein kann, mit der Steuereinrichtung 140 verbunden. Auch der Temperatursensor 138 ist über eine Signalverbindung 144 mit der Steuereinrichtung 140 verbunden. So kann die Steuereinrichtung 140 durch Einstellung des Regulierventiles 134 die Zumischung des Fluids aus dem Rücklauf an dem Mischpunkt 130 regulieren und so eine gewünschte Vorlauftemperatur einstellen, wobei über den Temperatursensor 138 eine entsprechende Rückmeldung an die Steuereinrichtung 140 erfolgt, welche eine Temperaturregelung ermöglicht.

Alle die in den Figuren 1 und 2 gezeigten und beschriebenen hydraulischen Komponenten der Mischeinrichtung sowie das Laufrad 118 des Umwälzpumpenaggregates sind in dem Pumpengehäuse 106 angeordnet. Das Pumpengehäuse 106 ist mit allen seinen Teilen, in denen die beschriebenen Strömungswege ausgebildet sind, vorzugsweise einstückig aus Kunststoff gefertigt. So kann eine sehr einfache Verbindung zwischen der beschriebenen Mischeinrichtung und den Komponenten der Umwälzpumpe erreicht werden, da alle Komponenten in ein einstückiges Gehäuse 106 integriert sind. Dadurch wird ein sehr kompakter Aufbau bei gleichzeitig einfacher Montage erreicht. In dem Pumpengehäuse 106 ist zusätzlich ein Entlüftungsventil 146 angeordnet, welches in Figuren 1 und 2 nicht dargestellt ist.

Die zuvor beschriebene Mischeinrichtung dient in dem hier gezeigten Beispiel des hydraulischen Verteilers als Mischeinrichtung für eine Fußbodenheizung. Der hydraulische Verteiler ist als Verteiler für eine Fußbodenheizungsanlage ausgestaltet. Die Mischeinrichtung dient somit dazu, die Temperatur eines Heizmediums auf die für die Fußbodenheizung erforderliche Temperatur abzusenken. Dies erfolgt durch Zumischung des kälteren Fluids aus dem Rücklauf, wie es vorangehend beschrieben wurde.

Der hier gezeigte hydraulische Verteiler, welcher zur Verwendung als Verteiler für ein Fußbodenheizungssystem vorgesehen ist, ist darüber hinaus modular aufgebaut. An einer Seite 146 des Hauptmoduls 102, d. h. des Umwälzpumpenaggregates 102, sind der erste Auslass 114 sowie der zweite Einlass 122 als hydraulische Kupplungen ausgebildet, in welche eine Zulaufkupplung 148 sowie eine Rücklaufkupplung 150 des Lastmoduls 104, welches angrenzend an das Hauptmodul 102 angeordnet ist, eingreifen. In dem Lastmodul 104 sind ein Abschnitt einer Zulaufleitung 152 sowie ein Abschnitt einer Rücklaufleitung 154 ausgebildet. Der Abschnitt der Zulaufleitung 152 verbindet die erste Zulaufkupplung 148 mit einer am entgegengesetzten Längsende des Lastmoduls 104 gelegenen zweiten Zulaufkupplung 156. Entsprechend verbindet der Abschnitt der Rücklaufleitung 154 die erste Rücklaufkupplung 150 mit einer am entgegengesetzten Längsende des Lastmoduls 104 gelegenen zweiten Rücklaufkupplung 158. Die erste Zulaufkupplung 148 sowie die erste Rücklaufkupplung 150 sind als männliche Kupplungsteile ausgebildet, welche in die zweite Zulaufkupplung 156 sowie zweite Rücklaufkupplung 158, welche als weibliche Kupplungsteile ausgebildet sind, eines angrenzenden Lastmoduls 104 eingreifen können, um eine fluidleitende Verbindung zwischen aneinander angrenzenden Abschnitten 152 der Zulaufleitung sowie aneinander angrenzenden Abschnitten der Rücklaufleitung 154 zu bilden. Der erste Auslass 114 an dem Hauptmodul 102 ist entsprechend der zweiten Zulaufkupplung 156 als weibliche Kupplung ausgebildet, sodass die erste Zulaufkupplung 148 des angrenzenden Lastmoduls 104 in fluidleitende Verbindung mit dem ersten Auslass 114 treten kann. Entsprechend ist der zweite Einlass 122 ebenfalls als weibliche hydraulische Kupplung ausgebildet, deren Ausgestaltung derjenigen der zweiten Rücklaufkupplung 158 entspricht, sodass die erste Rücklaufkupplung 150 des angrenzenden Lastmoduls 104 zur Herstellung einer hydraulischen Verbindung mit dem zweiten Einlass 122 in Eingriff treten kann.

Der Abschnitt der Zulaufleitung 152 jedes Lastmoduls weist einen Zulaufanschluss 160 auf. Ferner weist in jedem Lastmodul der Abschnitt der Rücklaufleitung 154 einen Rücklaufanschluss 162 auf. An dem Zulaufanschluss 160 jedes Lastmoduls 104 wird der Eingang eines Lastkreises und an den Rücklaufanschluss 162 jedes Lastmoduls 104 der Ausgang des zugehörigen Lastkreises angeschlossen. Die Lastkreise bilden hier jeweils einzelne Kreise einer Fußbodenheizungsanlage, wobei jeder Kreis vorzugsweise einen Raum beheizt.

In jedem Lastmodul 104 ist darüber hinaus zwischen dem Rücklaufanschluss 162 und dem Abschnitt der Rücklaufleitung 154 im Strömungsweg ein Regulierventil 164 angeordnet. Jedes Regulierventil 162 weist einen elektrischen Antriebsmotor 166 auf, durch welchen das zugehörige Regulierventil 164 in seinem Öffnungsgrad verstellbar ist. Die Regulierventile 164 sind darüber hinaus so ausgebildet, dass sie vollständig geschlossen werden können. Durch dieses vollständige Schließen ist es möglich den angeschlossenen Lastkreis zu unterbrechen bzw. abzuschalten. Ist das Regulierventil 164 geöffnet, lässt sich durch Verändern des Öffnungsgrades über den Antriebsmotor 166 der Durchfluss bzw. Volumenstrom durch den Lastkreis, welcher an den Zulaufanschluss 160 bzw. an den Rücklaufanschluss 162 angeschlossen ist, regulieren. Da in jedem Lastmodul eine derartige Reguliereinrichtung mit einem Regulierventil 164 angeordnet ist, lässt sich für jeden Lastkreis im Betrieb der Anlage der Durchfluss variieren und an den jeweiligen Betriebszustand, insbesondere den Energiebedarf des Lastkreises anpassen. Die Antriebsmotoren 166 sind über eine elektrische Verbindung 168 in jedem Lastmodul 104, welche der Energieversorgung und der Datenübertragung dient, mit der Steuereinrichtung 140, welche als Verteiler-Steuereinrichtung fungiert, verbunden. In den Lastmodulen 104 ist darüber hinaus jeweils ein Temperatursensor 170 in dem Strömungsweg zwischen dem Rücklaufanschluss 152 und dem Abschnitt 154 der Rücklaufleitung angeordnet. Der Temperatursensor 170 erfasst die Rücklauftemperatur am Ausgang des angeschlossenen Lastkreises. Die Temperatursensoren 170 sind jeweils ebenfalls mit der elektrischen Verbindung 168, welche einen Datenbus aufweist bzw. bildet, verbunden.

Zur Datenübertragung bzw. Kommunikation mit der Steuereinrichtung 140 weisen die Lastmodule 104 jeweils eine Modulsteuereinrichtung 172 auf. Die Modulsteuereinrichtungen 172 ermöglichen eine Adressierung der einzelnen Lastmodule 104 von der Steuereinrichtung 140. Die Steuereinrichtung 140 und die Modulsteuereinrichtung 172 sind vorzugsweise zur automatischen Kopplung ausgebildet. So weist die Steuereinrichtung 140 bevorzugt den Modulsteuereinrichtungen 172 und damit den zugehörigen Lastmodul 104 jeweils eine Adresse zu, sodass die Steuereinrichtung 140 zum einen gezielt Daten von dem jeweiligen Lastmodul 104, beispielsweise Temperaturwerte von dem Temperatursensor 170, erfassen kann und gleichzeitig gezielt den Antriebsmotor 166 zur Einstellung des Regulierventils 164 ansteuern kann. Bevorzugt wird für jedes Lastmodul 104 von der Steuereinrichtung 140 der Durchfluss durch den angeschlossenen Lastkreis über das Regulierventil 164 in Abhängigkeit der Temperaturdifferenz zwischen den Temperatursensoren 138 und 170 eingestellt, sodass die Temperaturdifferenz einen konstanten vorgegebenen Wert annimmt. Zur Herstellung der elektrischen Verbindung bzw. der Datenverbindung zwischen den einzelnen Lastmodulen 104 sind elektrische Steckkupplungen 174 zwischen den einzelnen Lastmodulen 104 vorgesehen. Dazu sind entsprechende Teile der elektrischen Steckkupplungen 174 an entgegengesetzten Längsenden der Lastmodule 104 vorgesehen, welche jeweils mit der elektrischen Steckkupplung 174 eines angrenzenden Lastmoduls 104 in Eingriff treten können. Entsprechend ist eine elektrische Steckkupplung 174 zwischen dem Hauptmodul 102 und dem angrenzenden Lastmodul 104 vorhanden.

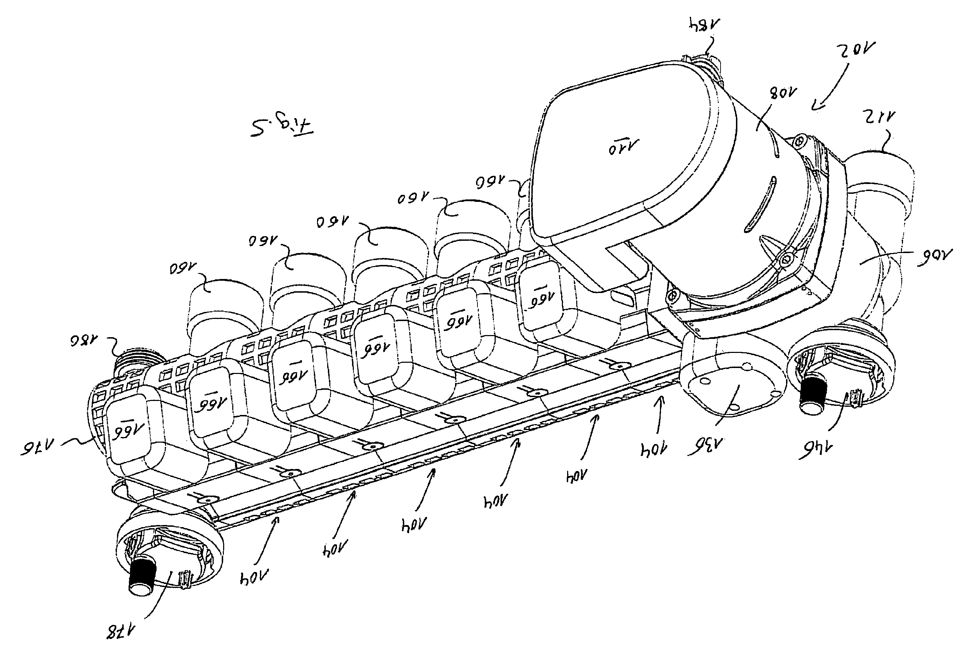

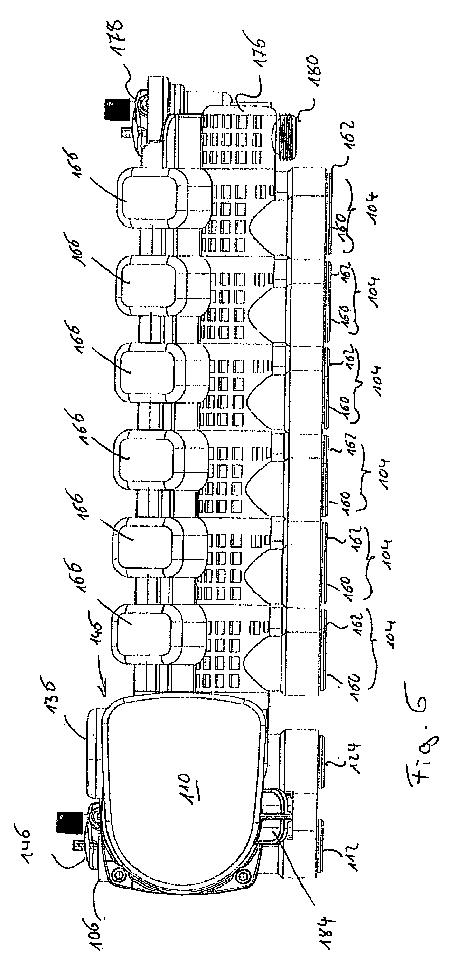

Durch die Ausgestaltung der elektrischen und hydraulischen Kupplungen zwischen den Lastmodulen 104 sowie zwischen dem Lastmodul 104 und dem Hauptmodul 102 ist es möglich, eine gewünschte Anzahl von Lastmodulen 104 mit dem Hauptmodul 102 zu verbinden, je nachdem wie viel Lastkreise angeschlossen werden sollen. So ist eine flexible Anpassung an verschiedene Heizungs- bzw. Kühlsysteme möglich und es ist nicht erforderlich jeweils für bestimmte Anzahlen von Lastkreisen vorgefertigte Verteiler bereitzuhalten. Vielmehr kann ein hydraulischer Verteiler der gewünschten Größe sehr einfach durch das Zusammenstecken der entsprechenden Zahl von Lastmodulen 104 aufgebaut werden, wie es in Figur 2 gezeigt ist. Das letzte, dem Hauptmodul 102 abgewandte Lastmodul 104 wird dabei an seinem freien, d. h. dem letzten angrenzendem Lastmodul 104 abgewandten Ende durch ein Endstück 176 abgeschlossen. Das Endstück 176 dient insbesondere dem Verschluss der zweiten Zulaufkupplung 156 sowie der zweiten Rücklaufkupplung 158 am Ende, sodass der Abschnitt der Zulaufleitung 152 und der Abschnitt der Rücklaufleitung 154 am freien Ende nach außen abgedichtet wird. In dem in Figur 6 gezeigten Beispiel weist das Endstück 176 darüber hinaus noch ein Entlüftungsventil 178 sowie einen Anschluss 180 auf, welcher mit der Rücklaufleitung 154 verbunden ist und beispielsweise zum Befüllen oder zum Spülen genutzt werden kann. Im normalen Betrieb ist dieser Anschluss 180 verschlossen. In den in Figuren 5 und 6 gezeigten Beispielen sind sechs Lastmodule 104 für sechs Lastkreise an das Hauptmodul 102 angefügt.

Neben den beschriebenen hydraulischen und elektrischen Verbindungen wird auch eine mechanische Verbindung zwischen den Lastmodulen 104 sowie zwischen dem ersten Lastmodul 104 und dem Hauptmodul 102 hergestellt. Die mechanische Verbindung wird in diesem Beispiel durch das Ineinandergreifen der hydraulischen Kupplungen, d. h. der ersten Zulaufkupplung 148, mit der zweiten Zulaufkupplung 156 sowie der ersten Rücklaufkupplung 150 mit der zweiten Rücklaufkupplung 158, hergestellt. Es ist jedoch zu verstehen, dass hier zusätzliche Rast- oder Sicherungselemente vorgesehen sein können, um eine feste mechanische Verbindung zwischen den einzelnen Modulen 102, 104 herzustellen.

Wenn die Module 102, 104 aneinandergefügt sind, bilden die Abschnitte der Zulaufleitung 152 der einzelnen Lastmodule 104, wie in Figur 2 zu sehen ist, eine durchgehende Zulaufleitung 152, während die Abschnitte der Rücklaufleitung 154 eine durchgehende Rücklaufleitung 154 bilden. Die Steuereinrichtung 140 bildet eine zentrale Verteiler-Steuereinrichtung, welche sowohl die Umwälzpumpe, d. h. deren Antriebsmotor 108, steuert bzw. regelt, insbesondere eine Drehzahlregelung für den Antriebsmotor 108 vornimmt, als auch die Mischeinrichtung durch Ansteuerung des Regulierventils 134 regelt. Darüber hinaus dient die Steuereinrichtung 140 hier als zentrale Steuereinrichtung für die Regulierventile 154 in sämtlichen Lastkreisen 104. In diesen bewirkt sie, wie oben beschrieben, eine Durchflussregelung und dient zum Ein- und Ausschalten der einzelnen Lastkreise. Dazu weist die Steuereinrichtung 140 eine Kommunikationsschnittstelle bzw. eine Kommunikationseinrichtung 181 auf, welche eine Kommunikation mit externen Raumthermostaten 182, in diesem Beispiel über Funk, ermöglicht. In Figur 2 sind nur zwei Raumthermostate 182 gezeigt. Es ist jedoch zu verstehen, dass vorzugsweise für jeden zu temperierenden Raum ein Raumthermostat 182 vorgesehen ist. An dem Raumthermostat 182 kann eine gewünschte Raumtemperatur eingestellt werden. Wenn die tatsächliche Raumtemperatur vom eingestellten Sollwert abweicht, sendet der Raumthermostat 182 ein Signal zu der Kommunikationsschnittstelle 181 der Steuereinrichtung 140, welche daraufhin veranlasst, einen zu dem Raumthermostat 182 zugehörigen Lastkreis durch Öffnen des zugehörigen Regulierventils 164 einzuschalten. Wird eine gewünschte Raumtemperatur erreicht, sendet der Raumthermostat 182 wiederum ein Signal, woraufhin die Steuereinrichtung 140 das zu diesem Lastkreis zugehörige Regulierventil 164 über den Antriebsmotor 166 schließt und damit den Lastkreis, welcher durch den zugehörigen Raum führt, abschaltet.

An dem Elektronikgehäuse 110 ist darüber hinaus ein elektrischer Anschluss 184 ausgebildet, welcher dem elektrischen Anschluss des gesamten hydraulischen Verteilers und all seiner elektrischen Komponenten dient. Der elektrische Anschluss 184 ist hier als Stecker ausgebildet, an welchem eine Netzleitung angeschlossen werden kann. Vorzugsweise ist in dem Elektronikgehäuse 110 ein Netzteil integriert und über die elektrischen Verbindungen 168 zu den Lastmodulen 104 werden lediglich Kleinspannungen übertragen.

### Bezugszeichenliste

- 102: - Hauptmodul
- 104: - Lastmodul
- 106: - Pumpengehäuse
- 108: - Statorgehäuse
- 110: - Elektronikgehäuse
- 112: - Erster Einlass
- 114: - Erster Auslass
- 116: - Strömungsweg
- 118: - Laufrad
- 120: - Aufnahmeraum
- 122: - Zweiter Einlass
- 124: - Zweiter Auslass
- 126: - Kanal
- 128: - Verbindung
- 130: - Mischpunkt
- 132: - Rückschlagventil
- 134: - Regulierventil
- 136: - Motor
- 138: - Temperatursensor
- 140: - Steuereinrichtung bzw. Verteiler-Steuereinrichtung
- 142, 144: - Signalverbindungen
- 146: - Seite
- 148: - Erste Zulaufkupplung
- 150: - Erste Rücklaufkupplung
- 152: - Zulaufleitung
- 154: - Rücklaufleitung
- 156: - Zweite Zulaufkupplung
- 158: - Zweite Rücklaufkupplung
- 160: - Zulaufanschluss
- 162: - Rücklaufanschluss
- 164: - Regulierventil
- 166: - Antriebsmotor
- 168: - Elektrische Verbindung
- 170: - Temperatursensor
- 172: - Modulsteuereinrichtung
- 174: - Elektrische Steckkupplung
- 176: - Endstück
- 178: - Entlüftungsventil
- 180: - Anschluss
- 181: - Kommunikationsschnittstelle
- 182: - Raumthermostat
- 184: - Elektrischer Anschluss

## Patentansprüche

1. Umwälzpumpenaggregat für ein Heizungs- und/oder Kühlsystem, welches einen elektrischen Antriebsmotor (108) und ein mit diesem verbundenes Pumpengehäuse (106) aufweist, in welchem zumindest ein Laufrad (118) gelegen ist und welches einen ersten Einlass (112) und einen ersten Auslass (114) aufweist, wobei das Pumpengehäuse (106) einen zweiten Einlass (122) aufweist, welcher im Inneren des Pumpengehäuses (106) an einem Mischpunkt (130) mit dem ersten Einlass (112) verbunden ist, und in dem Pumpengehäuse (106) ein Regulierventil (134), welches zur Regulierung eines Mischungsverhältnisses zweier sich an dem Mischpunkt (130) mischender Strömungen dient, sowie eine Steuereinrichtung (140) angeordnet ist, welche das Regulierventil (134) zur Regulierung des Mischungsverhältnisses ansteuert, **dadurch gekennzeichnet, dass** die Steuereinrichtung (140) in einem Elektronikgehäuse (110) an dem Antriebsmotor (108) angeordnet ist, in welchem die elektronischen Komponenten zur Regelung des Antriebsmotors (108) angeordnet sind.

2. Umwälzpumpenaggregat nach Anspruch 1, **dadurch gekennzeichnet, dass** das Regulierventil (134) in einem ersten Strömungsweg von dem ersten Einlass (112) zu dem Mischpunkt (130) zur Regulierung des Durchflusses angeordnet ist.

3. Umwälzpumpenaggregat nach Anspruch 1, **dadurch gekennzeichnet, dass** das Pumpengehäuse (106) einen zweiten Auslass (124) aufweist, welcher über einen Kanal (126) im Inneren des Pumpengehäuses (106) mit dem zweiten Einlass (122) verbunden ist.

4. Umwälzpumpenaggregat nach Anspruch 3, **dadurch gekennzeichnet, dass** das Regulierventil zur Regulierung des Durchflusses in dem Kanal (126) zwischen dem zweiten Einlass (122) und dem zweiten Auslass (124) stromabwärts einer Verbindung (128) des Kanals (126) mit dem Mischpunkt (130) angeordnet ist.

5. Umwälzpumpenaggregat nach Anspruch 1, **dadurch gekennzeichnet, dass** das Regulierventil (134) ein im Mischpunkt (130) angeordnetes Drei-Wegeventil ist.

6. Umwälzpumpenaggregat nach einem der vorangehenden Ansprüche, **dadurch gekennzeichnet, dass** das Pumpengehäuse (106) einstückig, vorzugsweise aus Kunststoff gefertigt ist.

7. Umwälzpumpenaggregat nach einem der vorangehenden Ansprüche, **dadurch gekennzeichnet, dass** das Regulierventil (134) ein motorisch angetriebenes Ventil ist.

8. Umwälzpumpenaggregat nach einem der vorangehenden Ansprüche, **dadurch gekennzeichnet, dass** die Steuereinrichtung (140) mit zumindest einem Temperatursensor (138), welcher vorzugsweise an einem Strömungsweg im Inneren des Pumpengehäuses (106) angeordnet ist, signalverbunden ist.

9. Umwälzpumpenaggregat nach einem der vorangehenden Ansprüche, **dadurch gekennzeichnet, dass** das Pumpengehäuse (106) an einer Gehäuseseite (146) zur Verbindung mit einem hydraulischen Verteiler (104) ausgebildet ist.

10. Umwälzpumpenaggregat nach Anspruch 9, **dadurch gekennzeichnet, dass** an der Gehäuseseite (146), welche zur Verbindung mit dem hydraulischen Verteiler (104) ausgebildet ist, der zweite Einlass (122) sowie der erste Auslass (114) des Pumpengehäuses (106) gelegen sind.

11. Hydraulischer Verteiler mit einem Umwälzpumpenaggregat (102) nach einem der vorangehenden Ansprüche und zumindest einem mit dem Pumpengehäuse (106) verbundenen Lastmodul (104), welches einen Abschnitt (152) einer Zulaufleitung und/oder einen Abschnitt (154) einer Rücklaufleitung aufweist, wobei der Abschnitt (152) der Zulaufleitung mit dem ersten Auslass (114) des Pumpengehäuses (106) verbunden ist und einen Zulaufanschluss (160) aufweist, während der Abschnitt (154) der Rücklaufleitung mit dem zweiten Einlass (122) des Pumpengehäuses (106) verbunden ist und einen Rücklaufanschluss (162) aufweist.

12. Hydraulischer Verteiler nach Anspruch 11, **dadurch gekennzeichnet, dass** das zumindest eine Lastmodul (104) lösbar mit dem Pumpengehäuse (102) verbunden ist.

13. Hydraulischer Verteiler nach Anspruch 11 oder 12, **dadurch gekennzeichnet, dass** das Lastmodul (104) an einem ersten Längsende mit dem Pumpengehäuse (102) und an einem abgewandten zweiten Längsende mit einem weiteren Lastmodul (104), vorzugsweise lösbar verbunden ist.

14. Hydraulischer Verteiler nach einem der vorangehenden Ansprüche, **dadurch gekennzeichnet, dass** in dem zumindest einen Lastmodul (104) eine Reguliereinrichtung (164) zum Regulieren des Durchflusses durch einen an den Zulauf- (160) und den Rücklaufanschluss (162) angeschlossenen Lastkreis angeordnet ist.

15. Hydraulischer Verteiler nach einem der Ansprüche 11 bis 14, **dadurch gekennzeichnet, dass** in dem Umwälzpumpenaggregat (102), vorzugsweise in einem an dem Antriebsmotor (108) angeordneten Elektronikgehäuse (110) eine Verteiler-Steuereinrichtung (140) angeordnet ist, welche mit der Reguliereinrichtung (164) in dem Lastmodul (104) zu deren Ansteuerung signalverbunden ist.

16. Hydraulischer Verteiler nach einem der Ansprüche 11 bis 15, **dadurch gekennzeichnet, dass** zwischen dem Lastmodul (104) und dem Pumpengehäuse (102) und bevorzugt zwischen dem Lastmodul (104) und einem weiteren Lastmodul (104) eine elektrische Kupplung (174) ausgebildet ist.

## Claims

1. A circulation pump assembly for a heating and/or cooling system and which comprises an electric drive motor (108) and a pump housing (106) which is connected to this drive motor and in which at least one impeller (118) is situated and which comprises a first inlet (112) and a first outlet (114), wherein the pump housing (106) comprises a second inlet (122) which is connected in the inside of the pump housing (106) at a mixing point (130) to the first inlet (112), and a regulating valve (134) which is designed for regulating the mixing ratio of two flows mixing at the mixing point (130) as well as a control device (140) which controls the regulating valve (134) for regulating the mixing ration are arranged in the pump housing (106), **characterised in that** the control device (140) is arranged in an electronics housing (110) on the drive motor (108), in which the electric components are arranged for the regulation of the drive motor (108).

2. A circulation pump assembly according to claim 1, **characterised in that** the regulating valve (134) is arranged in a first flow path from the first inlet (112) to the mixing point (130), for the regulation of the flow.

3. A circulation pump assembly according to claim 1, **characterised in that** the pump housing (106) comprises a second outlet (124) which via a channel (126) in the inside of the pump housing (106) is connected to the second inlet (122).

4. A circulation pump assembly according to claim 3, **characterised in that** the regulating valve for regulating the flow is arranged in the channel (126) between the second inlet (122) and the second outlet (124), downstream of a connection (128) of the channel (126) to the mixing point (130).

5. A circulation pump assembly according to claim 1, **characterised in that** the regulating valve (134) is a three-way valve which is arranged in the mixing point (130).

6. A circulation pump assembly according to one of the preceding claims, **characterised in that** the pump housing (106) is manufactured as one piece, preferably of plastic.

7. A circulation pump assembly according to one of the preceding claims, **characterised in that** the regulating valve (134) is a motorically driven valve.

8. A circulation pump assembly according to one of the preceding claims, **characterised in that** the control device (140) is signal-connected to at least one temperature sensor (138) which is arranged preferably on a flow path in the inside of the pump housing (106).

9. A circulation pump assembly according to one of the preceding claims, **characterised in that** the pump housing (106) is formed on a housing side (146) for connection to a hydraulic manifold (104).

10. A circulation pump assembly according to claim 9, **characterised in that** the second inlet (122) as well as the first outlet (114) of the pump housing (106) is situated on the housing side (146) which is designed for the connection to the hydraulic manifold (104).

11. A hydraulic manifold with a circulation pump assembly (102) according to one of the preceding claims and with at least one load module (104) which is connected to the pump housing (106) and which comprises a section (152) of a feed conduit and/or a section (154) of a return conduit, wherein the section (152) of the feed conduit is connected to the first outlet (114) of the pump housing (106) and comprises a feed connection (160), whereas the section (154) of the return conduit is connected to the second inlet (122) of the pump housing (106) and comprises a return connection (162).

12. A hydraulic manifold according to claim 11, **characterised in that** the at least one load module (104) is releasably connected to the pump housing (102).

13. A hydraulic manifold according to claim 11 or 12, **characterised in that** the load module (104) at a first longitudinal end is connected, preferably releasably to the pump housing (102), and at a distant, second longitudinal end to a further load module (104).

14. A hydraulic manifold according to one of the preceding claims, **characterised in that** a regulating device (164) for regulating the flow through a load circuit connected to the feed connection (160) and the return connection (162) is arranged in the at least one load module (104).

15. A hydraulic manifold according to one of the claims 11 to 14, **characterised in that** a manifold control device (140) is arranged in the circulation pump assembly (102), preferably in an electronics housing (110) arranged on the drive motor (108) and is signal-connected to the regulating device (164) in the load module (104) for its activation.

16. A hydraulic manifold according to one of the claims 11 to 15, **characterised in that** an electric coupling (174) is formed between the load module (104) and the pump housing (102) and preferably between the load module (104) and a further load module (104).

## Revendications

1. Module de pompe de circulation pour un système de chauffage et/ou de refroidissement, qui comprend un moteur d'entraînement électrique (108) et un carter de pompe (106) relié à celui-ci, dans lequel carter est disposé au moins une roue (118) et qui comprend une première entrée (112) et une première sortie (114), le carter de pompe (106) comprenant une seconde entrée (122) qui est reliée à la première entrée (112) à l'intérieur du carter de pompe (106) à un point de mélange (130), et dans le carter de pompe (106), étant disposés une valve de régulation (134) servant au réglage d'un rapport de mélange de deux flux se mélangeant au point de mélange (130) et un dispositif de commande (140) qui asservit la valve de régulation (134) pour régler le rapport de mélange, **caractérisé en ce que** le dispositif de commande (140) est disposé dans un boîtier d'électronique (110) au moteur d'entraînement (108), dans lequel les composantes électroniques pour le régulation du moteur d'entraînement (108) sont disposées.

2. Module de pompe de circulation selon la revendication 1, **caractérisé en ce que** la valve de régulation (134) est disposée dans un premier chemin d'écoulement de la première entrée (112) vers le point de mélange (130) pour réguler le débit.

3. Module de pompe de circulation selon la revendication 1, **caractérisé en ce que** le carter de pompe (106) comprend une seconde sortie (124) qui est reliée à la seconde entrée (122) par un canal (126) à l'intérieur du carter de pompe (106).

4. Module de pompe de circulation selon la revendication 3, **caractérisé en ce que** la valve de régulation pour réguler le débit dans le canal (126) est disposée entre la seconde entrée (122) et la seconde sortie (124) en aval d'une liaison (128) du canal (126) avec le point de mélange (130).

5. Module de pompe de circulation selon la revendication 1, **caractérisé en ce que** la valve de régulation (134) est une valve à trois voies disposée au point de mélange (130).

6. Module de pompe de circulation selon l'une des revendications précédentes, **caractérisé en ce que** le carter de pompe (106) est réalisé en une seule pièce, de préférence en matière plastique.

7. Module de pompe de circulation selon l'une des revendications précédentes, **caractérisé en ce que** la valve de régulation (134) est une valve entraînée par moteur.

8. Module de pompe de circulation selon l'une des revendications précédentes, **caractérisé en ce que** le dispositif de commande (140) est relié par voie de signal, avec au moins un capteur de température (138) qui est disposé de préférence sur un chemin d'écoulement à l'intérieur du carter de pompe (106).

9. Module de pompe de circulation selon l'une des revendications précédentes, **caractérisé en ce que** le carter de pompe (106) est conformé à un côté du carter (146) pour une connexion avec un répartiteur hydraulique (104).

10. Module de pompe de circulation selon la revendication 9, **caractérisé en ce que** du côté du carter (146) qui est conformé pour une connexion avec le répartiteur hydraulique (104), sont disposées la seconde entrée (122) et la première sortie (114) du carter de pompe (106).

11. Répartiteur hydraulique avec un module de pompe de circulation (102) selon l'une des revendications précédentes et avec au moins un module de charge (104) relié au carter de pompe (106), qui comprend un tronçon (152) d'un conduit d'amenée et/ou un tronçon (154) d'un conduit de retour, le tronçon (152) du conduit d'amenée étant relié à la première sortie (114) du carter de pompe (106) et comprenant un raccord d'amenée (160) alors que le tronçon (154) du conduit de retour est relié à la seconde entrée (122) du carter de pompe (106) et comprend un raccord de retour (162).

12. Répartiteur hydraulique selon la revendication 11, **caractérisé en ce que** ledit au moins un module de charge (104) et raccordé au carter de pompe (106) de manière amovible.

13. Répartiteur hydraulique selon la revendication 11 ou 12, **caractérisé en ce que** le module de charge (104) est raccordé, de préférence de manière amovible, sur une première extrémité longitudinale au carter de pompe (106) et sur une seconde extrémité éloignée à un autre module de charge (104).

14. Répartiteur hydraulique selon l'une des revendications précédentes, **caractérisé en ce que** dans ledit au moins un module de charge (104) est disposé un dispositif de régulation (164) pour réguler le débit dans un circuit de charge raccordé au raccord d'amenée (160) et au raccord de retour (162).

15. Répartiteur hydraulique selon l'une des revendications 11 à 14, **caractérisé en ce que**, dans le module de pompe de circulation (102), de préférence dans un boîtier d'électronique (110), est disposé un dispositif de commande de répartiteur (140) qui est relié, par voie de signal, pour l'asservissement de celui-ci, au dispositif de régulation (164) dans le module de charge (104).

16. Répartiteur hydraulique selon l'une des revendications 11 à 15, **caractérisé en ce qu'**un accouplement électrique (174) est formé entre le module de charge (104) et le carter de pompe (106) et de préférence entre le module de charge (104) et un autre module de charge (104).
